# EUROPEAN PATENT SPECIFICATION

(11) **EP 2 233 802 B1**
(45) Date of publication and mention of the grant of the patent: **16.07.2014**
(21) Application number: 10002993.3
(22) Date of filing: 22.03.2010
(51) Int. Cl.: F16J 15/34, F16J 15/40

(54) **Shaft-seal device for a high-speed rotation apparatus**
Wellenabdichtungsvorrichtung für eine Hochgeschwindigkeitsrotationsvorrichtung
Dispositif de joint d'arbre pour appareil rotatif haute vitesse

(30) Priority: 24.03.2009 JP 2009071097
(43) Date of publication of application: 29.09.2010
(73) Proprietor: Hitachi, Ltd., Chiyoda-ku Tokyo (JP); Nippon Plant Packing Co. Ltd., Osaka-shi Osaka 532 0022 (JP)
(72) Inventor: Hashimoto, Taiji, Chiyoda-ku, Tokyo (JP); Hu, Tao, Chiyoda-ku, Tokyo (JP); Yamauchi, Sadamitsu, Sanda-shi Hyogo 669-1333 (JP); Okumachi, Eiji, Sanda-shi Hyogo 669-1333 (JP); Ninomiya, Masanobu, Sanda-shi Hyogo 669-1333 (JP)
(74) Representative: Schubert, Siegmar

(56) References cited:
- EP-A2- 1 205 696
- WO-A1-2007/001233
- JP-A- 2000 018 392
- JP-A- 2006 250 306
- JP-A- 2006 283 896

## Description

### TECHNICAL FIELD

The present invention relates to a shaft-seal device used in a high-speed rotation apparatus (such as vapor compressors, compressors, blowers, pumps, agitators and the like used in nuclear electricity generation systems) in which a rotary shaft rotates at high speed and more particularly to a shaft-seal device for a high-speed rotation apparatus structured such that seal water is supplied, to circulate, into a sealed space formed between a pair of end-face contact-type mechanical seals provided in a tandem fashion.

### BACKGROUND ART

One conventionally known this type of shaft-seal device is a tandem seal. The tandem seal includes a pair of mechanical seals structured such that sealing end-faces, which are the facing end-faces of a rotational sealing ring fixed to a rotary shaft and a stationary sealing ring held by a seal case, through which the rotary shaft penetrates, so as to be movable in its axial direction and provided to press against the rotational sealing ring, make a relative rotational contact with each other, so that the two mechanical seals are provided in a tandem fashion with one as a sealed fluid region side mechanical seal and the other as an atmosphere region side mechanical seal, and so that seal water is supplied, to circulate, into the sealed space formed between the two mechanical seals at a pressure lower than the sealed fluid region that is the outer-diameter side region of the sealing end-face of the mechanical seal on the sealed fluid region side and at a pressure higher than the atmosphere region that is the inner-diameter side region of the sealing end-face of the atmosphere region side mechanical seal (see, the Japanese Patent Application Laid-Open (Kokai) No. 2000-18392, for example.)

This shaft-seal device can provide a good seal by means of the sealed space, even when the sealed fluid is a high-pressure fluid, by supplying the seal water to the sealed space at a pressure higher than the region inside a machine which is a sealed fluid region. In addition, in this shaft-seal device, the relative rotational contact portions of the sealing rings in the end-face contact-type mechanical seal are lubricated by the seal water while suppressing heat generation etc. in the relative rotational contact portions by flushing with the seal water, thus providing a good sealing performance even when the rotary shaft rotates at high speed.

However, in such conventional tandem seals, the supply and discharge of the seal water to and from the sealed space is conducted at a single location in the inner-circumference part of the seal case. In other words, the seal water is supplied to the sealed space from a water supply port provided at one location in the inner-circumference part of the seal case and the seal water in the sealed space is discharged from a water discharge port provided at a single location in the inner-circumference part of the seal, the problem described below occurs when the rotary shaft is rotated at high speed.

More specifically, high-speed rotation of the rotational sealing ring of the mechanical seal in the atmosphere-region side can cause pumping or conveyance of the seal water around the rotational sealing ring as the rotational sealing ring rotates in the sealed space; as a result, when the seal water inside the sealed space flows into the discharge port which is provided at a single location, a violent pulsing of the seal water inside the sealed space occurs. Then, when this pulsing occurs, the rotary shaft and the rotation-side elements mounted on it vibrate, and eventually the rotation apparatus as a whole would vibrate, causing major problems such as decrease in the seal performance by the shaft-seal device. The occurrence of the problems caused by this sort of pulsing becomes particularly pronounced more when the rotary shaft rotates at higher rotational speed. WO 2007001233 discloses a shaft-seal device according to the preamble of claim 1.

### SUMMARY OF THE INVENTION

The present invention is made in view of the facts described above, and it is an object of the present invention to provide a shaft-seal device for a high-speed rotation apparatus that is a tandem device and can provide good seal performance even under the conditions of high speed and high pressure by preventing the occurrence of the phenomenon of pulsing of seal water as much as possible.

The present invention provides a shaft-seal device for a high-speed rotation apparatus, and it comprises a sealed fluid region side mechanical seal and an atmosphere region side mechanical seal that are provided in a tandem fashion, wherein each of the mechanical seals is comprised of a rotational sealing ring fixed to a rotary shaft, and a stationary sealing ring that is held by a seal case, through which the rotary shaft penetrates, so as to be movable in an axial direction and that is pressed against the rotational sealing ring, so that sealing end-faces that are the facing end-faces of the rotational and stationary sealing rings make a relative rotational contact with each other; and wherein seal water, at a pressure lower than a sealed fluid region that is an outer-diameter side region of the sealing end-faces of the sealed fluid region side mechanical seal and at a pressure higher than an atmosphere region that is an inner-diameter side region of the sealing end-faces of the atmosphere region side mechanical seal, is supplied, to circulate, into a sealed space which is between the two mechanical seals; and
the shaft-seal device of the present invention further comprising:
a water feed/discharge means that supplies and circulates the seal water to the sealed space is comprised of: a feed water path formed in the seal case and connected to a feed water line outside the seal case, a discharge water path formed in the seal case and connected to a discharge water line outside the seal case, a ring-shaped feed water channel that is formed in the inner-circumference surface of the seal case and communicates to the feed water path, a ring-shaped discharge water channel that is formed in the inner-circumference surface of the seal case and communicates to a discharge water path, and the water feed/discharge means being characterised by a shower ring mounted on the inner-circumference surface of the seal case to close openings in the feed water channel and discharge water channel, feed water holes that are formed in the shower ring and communicate to the feed water channel, the feed water holes being a plurality of through-holes provided at equal intervals in the circumferential direction of the shower ring, and discharge water holes that are formed in the shower ring and communicate to the discharge water channel, the discharge water holes being a plurality of through-holes provided at equal intervals in the circumferential direction of the shower ring, and
by the seal water being supplied from the feed water path to the feed water channel is supplied through all the feed water holes to the sealed space while the feed water inside the sealed space is discharged to the discharge water path through all the discharge water holes to the discharge water channel, thus suppressing pulsing phenomena in the seal water occurring inside the sealed space caused by the supply and circulation of the seal water.

In a preferred embodiment of the above-described shaft-seal device, the feed water holes are provided so as to face the outer-circumference surface of the rotational sealing ring of the atmosphere region side mechanical seal, and the discharge water holes are provided so as to face the outer-circumference surface of the stationary sealing ring of the atmosphere region side mechanical seal; and it can also be designed so that the feed water holes are provided so as to face the outer-circumference surface of the stationary sealing ring of the atmosphere region side mechanical seal, and the discharge water holes are provided so as to face the outer-circumference surface of the rotational sealing ring of the atmosphere region side mechanical seal.
In either of the above-described structure, it is preferable that the feed water path comprise a ring-shaped feed water header chamber that communicates to the feed water line and a plurality of feed water connection channels that are disposed at equal intervals in the circumferential direction and communicate the feed water header chamber to the interior of the feed water channel closed by the shower ring, and that the discharge water path comprise a ring-shaped discharge header chamber that communicates to the discharge water line and a plurality of discharge connection channels that are disposed at equal intervals in the circumferential direction and communicate the discharge header chamber to the interior of the discharge water channel closed by the shower ring.
It is further preferable that when a plurality of feed water and discharge connection channels be provided, the feed water connection channels and the discharge connection channels be provided to form an X shape in cross-section crossing along an axis line of the rotary shaft.

In the shaft-seal device for a high-speed rotation apparatus according to the present invention, the seal water circulation to the sealed space is conducted by a plurality of feed/discharge water holes separated at equal intervals and provided in the circumferential direction. Accordingly, substantially no seal water pulsing would occur in the sealed space even in a situation that the pumping phenomenon or conveyance phenomenon described above occurs when the rotating shaft rotates at high speed, and good seal performance can be achieved even under conditions of high speed operation without generating vibration due to pulsing. Moreover, in the present invention, flushing using the seal water by spraying the seal water from the plurality of discharge water holes is accomplished efficiently, thus allowing the seal performance to be even better done under high-speed conditions in addition to the seal water pulse prevention effect described above.

### BRIEF DESCRIPTION OF THE DRAWINGS

Figure 1 is a side cross-sectional view of an example of a seal device that uses the shaft-seal device for a high-speed rotation apparatus according to the present invention as a secondary seal.
Figure 2 is a detailed and enlarged illustration of the essential portion of the structure of Figure 1.
Figure 3 is a front vertical cross-sectional view taken along the line III-III of Figure 1.
Figure 4 is a front vertical cross-sectional view taken along the line IV-IV of Figure 1.
Figure 5 is a front vertical cross-sectional view taken along the line V-V of Figure 1.
Figure 6 is a front vertical cross-sectional view taken along the line VI-VI of Figure 1.
Figure 7 is a side vertical cross-sectional view of a modified example of the seal device according to the present invention.
Figure 8 is a side vertical-cross sectional view of another modified example of the seal device according to the present invention.
Figure 9 is a graph of the experimental data showing the relationship between the number of rotations (rpm) and the amplitude of vibration of a rotary shaft.

### BEST MODES FOR CARRYING OUT THE INVENTION

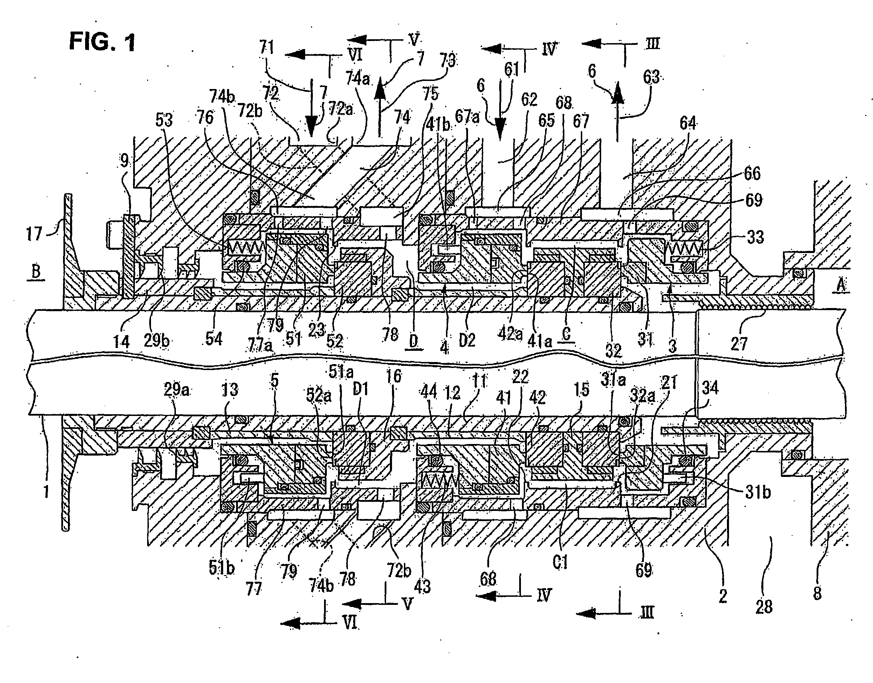

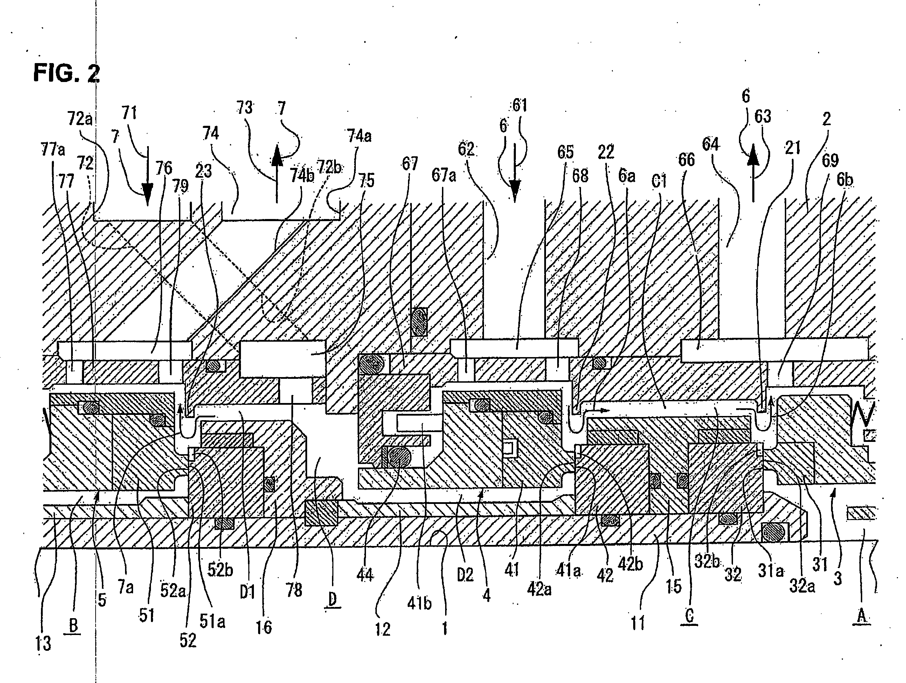

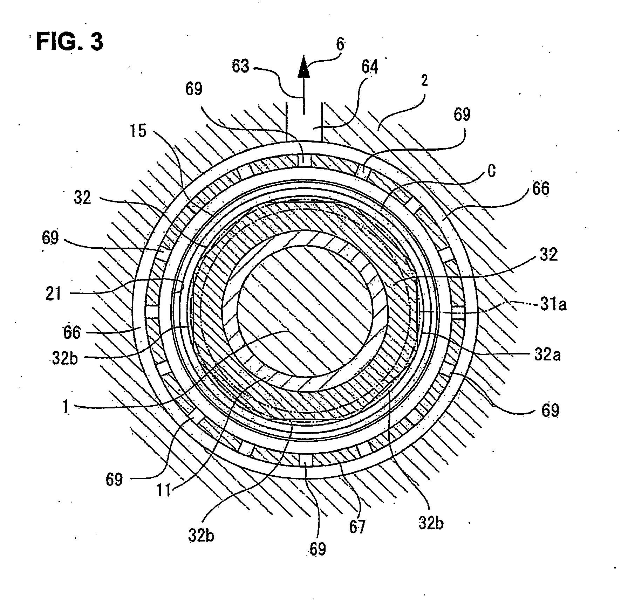

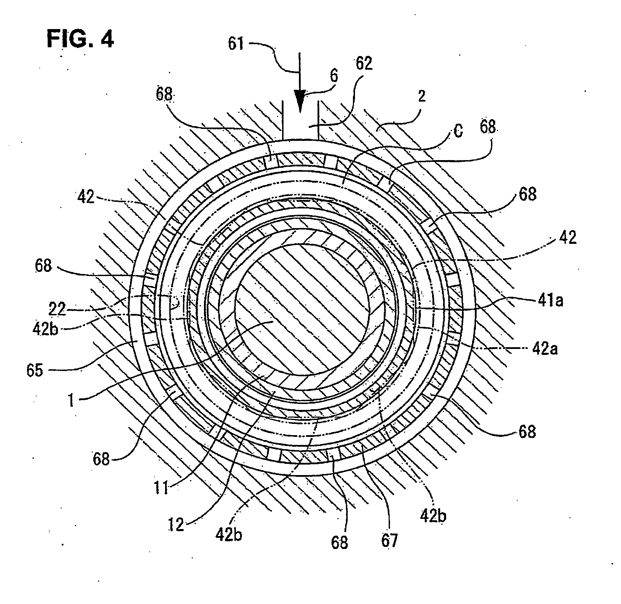

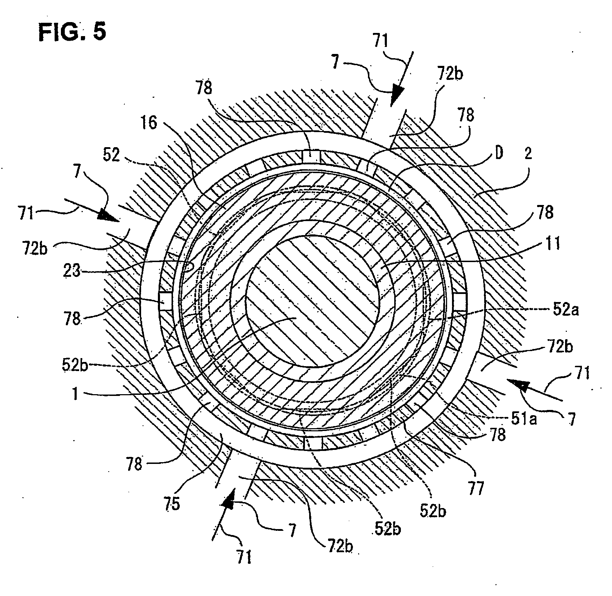

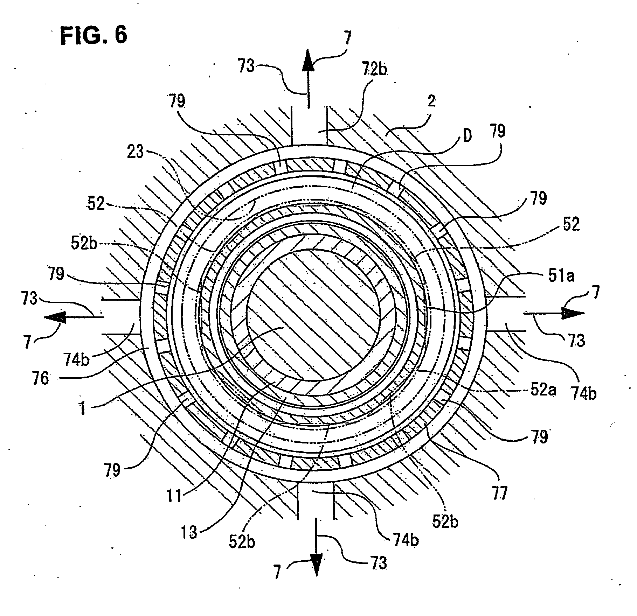

Figure 1, a side cross-sectional view, shows an example of a seal device that uses the shaft-seal device for a high-speed rotation apparatus of the present invention as a secondary seal, Figure 2 shows the essential portion of the structure of Figure 1, Figure 3 shows a front vertical cross-section taken along the line III-III of Figure 1, Figure 4 shows a front vertical cross-section taken along the line IV-IV of Figure 1, Figure 5 shows a front vertical cross-section taken along the line V-V of Figure 1, and Figure 6 shows a front vertical cross-section taken along the line VI-VI of Figure 1.

The seal device shown in Figure 1 is a mechanical seal device compatible with a high PV value that is used in a rotation apparatus (such as vapor compressors, compressors, blowers, pumps, agitators and the like used in nuclear electricity generation systems) in which the rotary shaft rotates at high speed (for example, the circumferential velocity of the rotary shaft is 20 m/s or higher). This mechanical seal device is comprised of first through third mechanical seals 3, 4 and 5 that are disposed in the axial direction of a rotary shaft 1 in such manner that they are between the rotary shaft 1 and a seal case 2 that surrounds the rotary shaft 1. This seal device seals the space between the high-pressure gas region A that is an intra-mechanical region (which is, for example, a high-pressure steam region) and the atmosphere region B that is an extra-mechanical region by means of a sealed space C formed between the first mechanical seal 3 and the second mechanical seal 4 (hereafter, called the "first sealed space") and by a sealed space D formed between the second mechanical seal 4 and the third mechanical seal 5 (hereafter, called the "second sealed space"). In other words, the first mechanical seal 3 forms a primary seal that seals the space between the intra-mechanical region A and the first sealed space C, which is a sealed fluid region, while the second and third mechanical seals 4 and 5 form a secondary seal that seals the space between the first sealed space C, which is a secondary sealed fluid region, and the atmosphere region B, which is a non-sealed fluid region, with the secondary sealed space D in between. In this shown example, the present invention is applied in the secondary seal. In other words, the secondary seal that is comprised of the second and third mechanical seals 4 and 5 is the shaft-seal device of the present invention. The pressure in the description that follows is a gauge pressure.

The seal case 2 is of a cylindrical shape and mounted on a housing 8 of the rotation apparatus, and the rotary shaft 1 of the rotation apparatus coaxially passes through the seal case 2.

The first mechanical seal 3, as shown in Figure 1, comprises a stationary sealing ring 31 (hereinafter, called the "first stationary sealing ring") that is held by the seal case 2 so as to be movable in its axial direction, a rotational sealing ring 32 (hereinafter, called the "first rotational sealing ring") that is fixed to the rotary shaft 1 and facing the first stationary sealing ring, and a spring member 33, which presses the first stationary sealing ring 31 against the first rotational sealing ring 32. The first mechanical seal 3 is an end-face contact-type mechanical seal that, by means of the relative rotational contact action of the sealing end-faces 31a and 32a which are the end-faces of the two sealing rings 31 and 32 that face each other, seals the space between the intra-mechanical region A, which is the region on the inner-circumference side of the relative rotational contact portions, and the sealed space C (hereinafter, called the "first sealed space"), which is the region at their outer circumference.

The third mechanical seal 5, as shown in Figure 1, comprises a stationary sealing ring 51 (hereinafter, called the "third stationary sealing ring") that is held by the seal case 2 so as to be movable in its axial direction, a rotational sealing ring 52 (hereinafter, called the "third rotational sealing ring") that is fixed to the rotary shaft 1 and facing the third stationary sealing ring, and a spring member 53 that presses the third stationary sealing ring 51 against the third rotational sealing ring 52. The third mechanical seal 5 is an end-face contact-type mechanical seal that, by means of the relative rotational contact action of the sealing end-faces 51a and 52a which are the end-faces of the two sealing rings 51 and 52 that face each other, seals the space between the atmosphere region B, which is the region on the inner-circumference side of the relative rotational contact portions, and the second sealed space D, which is the region at their outer circumference.

The second mechanical seal 4 is, as shown in Figure 1, disposed between the first mechanical seal 3 and the second mechanical seal 5. This second mechanical seal 4 is comprised of a stationary sealing ring 41 (hereinafter, called the "second stationary sealing ring") that is held by the seal case 2 so as to be movable in its axial direction, a rotational sealing ring 42 (hereinafter, called the "second rotational sealing ring") that is fixed to the rotary shaft 1 and facing the second stationary sealing ring 41, and a spring member 43 that presses the second stationary sealing ring 41 against the second rotational sealing ring 42. The second mechanical seal 4 is an end-face contact-type mechanical seal that, by means of the relative rotational contact action of the sealing end-faces 41a and 42a which are the end-faces of the two sealing rings 41 and 42 that face each other, seals the space between the first sealed space C (the sealed fluid region in the secondary seal), which is the region on the outer-circumference side of the relative rotational contact portions, and the second sealed space D, which is the region at the inner circumference.

The first mechanical seal 3 and the second mechanical seal 4 constitute a double seal structure in which the sealing ring disposition (location) in the axial direction is opposite from each other. The second mechanical seal 4 and the third mechanical seal 5 constitute a tandem seal (tandem double seal structure) and the sealing ring disposition in the axial direction is identical. The first and second rotational sealing rings 32 and 42 are fixed to the rotary shaft 1 by means of sleeves 11 and 12 and holding ring 15 with their base end-faces facing each other. The first and second stationary sealing rings 31 and 41 are fitted in and held by the seal case 2 such that they are movable in the axial direction via the respective O-rings 34 and 44, and their front end-faces (sealing end-faces) 31a and 41a face each other with the rotational sealing rings 32 and 42 in between. The sealing rings 51 and 52 of the third mechanical seal 5 are disposed on the atmosphere region B side of the second mechanical seal 4 such that their orientation is the same as the sealing rings 41 and 42 of the second mechanical seal 4 (tandem disposition). The third rotational sealing ring 52 is fixed to the rotating shaft 1 by means of sleeves 11 and 13 and holding ring 16, and the third stationary sealing ring 51 is inserted into and held by the seal case 2 by means of an O-ring 54 so as to be movable in its axial direction.

The stationary sealing rings 31, 41 and 51 of the respective first, second and third mechanical seal 3, 4 and 5 are, as shown in Figures 1 and 2, ring-shaped bodies fitted and held in place, via O-rings 34, 44 and 54, respectively, in spring retainer portions formed in the inner-circumference part of the seal case 2 such that they can move in the axial direction; and their front end-faces form sealing end-faces 31a, 41a and 51a, which are flat, smooth ring-shaped surfaces orthogonal to the axis line of the rotary shaft 1. The stationary sealing rings 31, 41 and 51 are prevented from rotating relative to the seal case 2, though allowed to make an axis line movement within a prescribed range, by their drive pins 31 b, 41 b and 51 b which respectively project out therefrom and engaged with engagement holes formed in the spring retainer portions. The portions (sealing end-face formation portions) where the sealing end-faces 31a, 41a and 51a are formed respectively on the stationary seal ing rings 31, 41 and 51 are made of carbon.

The rotational sealing rings 32, 42 and 52 of the respective first, second and third mechanical seal 3, 4 and 5 are, as shown in Figures 1 and 2, ring-shaped bodies respectively fixed to the rotating shaft 1 via the sleeves 11, 12, 13 and 14 and holding rings 15 and 16. Their front end-faces respectively make sealing end-faces 32a, 42a and 52a, which are flat, smooth ring-shaped surfaces orthogonal to the axis line of the rotary shaft 1. The outer-circumference surfaces (the outer-circumference surface parts except for the front end parts formed with the sealing end-faces 32a and 42a) of the first and second rotational sealing rings 32 and 42 are respectively covered by the outer-circumference surface of the holding ring 15, and form a seal water flow channel C1 (a cylindrical flow channel that runs parallel to the axial direction) that has no indentations or protrusions in the space between the facing circumferential surfaces of the two rotational sealing rings 32 and 42 and the inner-circumference part of seal case 2 (shower ring 67, which will be described later). The outer-circumference surface (the outer-circumference surface parts except for the front end part formed with sealing end-face 52a) and the rear surface (base end-face) of the third rotational sealing ring 52 are covered by the holding ring 16, and form a seal water flow channel D1 (a cylindrical flow channel that runs parallel to the axial direction) that has no indentations or protrusions in the space between the facing circumferential surfaces of the third rotational sealing ring 52 and the inner-circumference part of the seal case 2 (shower ring 77, which will be described later). The portions that form the sealing end-faces 32a, 42a and 52a of the rotational sealing rings 32, 42 and 52 (sealing end-face forming portions) are made of a ceramic (silicon carbide or the like) or the like that is harder than the sealing end-face forming portions of the stationary sealing rings 31, 41 and 51.

The spring members 33, 43 and 53 of the respective first, second and third mechanical seal 3, 4 and 5 are, as shown in Figure 1, formed by a plurality of coil springs loaded between the stationary sealing rings 31, 41 and 51 and the above-described spring retainer portions and separated by a prescribed interval in the circumferential direction. The spring members 33, 43 and 53 are provided to respectively make the stationary sealing rings 31, 41 and 51 press against the rotational sealing rings 32, 42 and 52.

In the example shown above, the seal device is of a cartridge structure in which the stationary side elements (the seal case 2, stationary sealing rings 31, 41 and 51, and the like) and the rotating side elements (the sleeves 11, 12, 13 and 14, rotational sealing rings 32, 42 and 52, and the like) are combined into a single unit by engaging the set catch 9 mounted on the end part of the seal case 2 in the extra-mechanical region B with the sleeves 11 and 14. In other words, the above-described stationary side elements and rotating side elements are kept in a single unit using the set catch 9, so that they can be together mounted on and dismounted from the rotating shaft 1 (and housing 8). The set catch 9 is removed after the stationary and rotating side elements are mounted for operation. Also, as shown in Figure 1, the seal case 2 is provided with a labyrinth seal 27 and a water cooling jacket 28 disposed at the end of the intra-mechanical region A side and is also provided with labyrinth seals 29a and 29b disposed at the end of the atmosphere region B side, and further, a sling 17 is provided at the tip end of the atmosphere region B side of the sleeve 11.

Furthermore, by a first water feed/discharge means (describe below), the first sealed space C is supplied by, to circulate therein, seal water 6 which is at a pressure higher than that of the intra-mechanical region A. In addition, by a second water feed/discharge means (describe below), the second sealed space D is supplied by, to circulate therein, seal water 7. The seal water 7 is at a pressure lower than that of the first sealed space C (a sealed fluid region that is sealed by a secondary seal), which is a region at the outer-diameter side of the sealing end-faces 41a and 42a in the second mechanical seal 4 (a mechanical seal on the sealed fluid region side at the secondary seal), and higher than that of the atmosphere region B, which is a region at the inner-diameter side of the sealing end-faces 51a and 52a in the third mechanical seal 5 (an atmosphere region side mechanical seal in the secondary seal). The sealed spaces C and D are kept at prescribed pressures (Intra-mechanical region A pressure < First sealed space C pressure, and Extra-mechanical region B pressure (atmospheric pressure) < Second sealed space D pressure < First sealed space C pressure) and are further designed so that a flushing effect is accomplished in such spaces using the seal water 6 and 7.
In addition, as shown in Figures 2 through 6, indentations (hydro-cuts) 32b, 42b and 52b that partially cover the outer-circumference edge of the facing sealing end-faces 31a, 41a and 51a (sealing end-faces of the stationary sealing rings 31, 41 and 51) are formed in the outer-circumference edges of the respective sealing end-faces 32a, 42a and 52a of the rotational sealing rings 32, 42 and 52. These indentations (hydro-cuts) 32b, 42b and 52b are for enabling effective lubrication between the sealing end-faces 31a and 32a, 41a and 42a and 51a and 52a by aggressively introducing the seal water 6 between the respective stationary and rotational sealing rings 31 and 32 and 41 and 42 and the seal water 7 between the stationary and rotational sealing rings 51 and 52

The first water feed/discharge means is, as shown in Figures 1 and 2, comprised of a feed water path 62 formed in the seal case 2 and connected to a feed water line 61 that is outside the seal case 2, a discharge water path 64 formed in the seal case 2 and connected to a discharge water line 63 that is outside the seal case 2, a ring-shaped feed water channel 65 that is formed in the inner-circumference surface of the seal case 2 and communicates to the feed water path 62, a ring-shaped discharge water channel 66 that is formed in the inner-circumference surface of the seal case 2 and communicates to the discharge water path 64, and a shower ring 67 mounted on the inner-circumference surface of the seal case 2 to close the openings of the feed water channel 65 and discharge water channel 66. The first water feed/discharge means further includes feed water holes 68 and discharge water holes 69. The feed water holes 68 are formed in the shower ring 67 and are a plurality of through-holes provided at equal intervals in the circumferential direction of the shower ring 67 and communicate to the feed water channel 65, and the discharge water holes 69 are also formed in the shower ring 67 and are a plurality of through-holes provided at equal intervals in the circumferential direction of the shower ring 67 and communicate to the discharge water channel 66.
With the first water feed/discharge means thus constructed, the seal water 6 supplied from the feed water path 62 to the feed water channel 65 is supplied through all the feed water holes 68 to the first sealed space C while the feed water 6 inside the first sealed space C is discharged to the discharge water path 64 through all the discharge water holes 69 from the discharge water channel 66. The feed water holes 68 are, as shown in Figures 1 through 3, formed in the shower ring 67 such that they form openings that face the sealing end-face 41a which is the outer-circumference surface of the stationary seal ring 41 (second stationary seal ring) of the second mechanical seal 4.
The discharge water holes 69 are, as shown in Figures 1, 2 and 4, formed in the shower ring 67 such that they form openings that face the sealing end-face 31a which is the outer-circumference surface of the stationary seal ring 31 (second stationary seal ring) of the first mechanical seal 3.
Furthermore, the shower ring 67 of the first water feed/discharge means is provided with an appropriate number of air vent holes 67a. The air vent holes 67a are disposed in the shower ring 67 at positions away from the feed water holes 68 toward the atmosphere region B side, and they communicate the first sealed space C to the interior of the feed water channel 65.

The feed/discharge water lines 61 and 63 of the first water feed/discharge means are connected to a seal-water supply device (not shown) equipped with a plunger pump or the like; and the feed/discharge water lines 61 and 63, the feed/discharge water paths 62 and 64, the feed/discharge water channels 65 and 66, the feed/discharge water holes 68 and 69, and the first sealed space C form a circulation line of the seal water 6. In other words, the seal water 6 at constant pressure is supplied from the feed water holes 68 to the first sealed space C at constant flow while the same amount of seal water 6 is discharged from the first sealed space C to the discharge water holes 69, thus making supply and circulation of the seal water 6 into the first sealed space C at constant pressure. Accordingly, the first sealed space C is constantly filled with the seal water 6 and maintained at constant pressure. The pressure and circulation volume of the seal water 6 is set to be somewhat higher (about 0.5 MPaG) in the first sealed space C than in the intra-mechanical region A. For example, when the fluid in the intra-mechanical region A is high-pressure steam at 7.2 MPaG, then the pressure of the seal water 6 is set to 7.7 MPaG and the feed/discharge volume of the seal water 6 (circulation volume) is set at 96 L/min, thus keeping the pressure of the first sealed space C 0.5 MPaG higher than that of the intra-mechanical region A.

The relative rotational contact portions 31a and 32a in the first mechanical seal 3 and the relative rotational contact portions 41a and 42a in the second mechanical seal 4 are flushed by the seal water 6 supplied to and discharged from the first sealed space C. So as to make this flushing with the seal water 6 performed more efficiently, ring-shaped first and second guide projections 21 and 22 are formed in the inner-circumference part of the shower ring 67 so that they are disposed at positions facing the relative rotational contact portions 31 a and 32a of the first mechanical seal 3 and at a position facing the relative rotational contact portions 41a and 42a of the second mechanical seal 4 as shown in Figure 2. The seal water 6 is thus guided toward the relative rotational contact portions 3 1 a and 32a of the first mechanical seal 3 and toward the relative rotational contact portions 41a and 42a of the second mechanical seal 4 when the seal water 6 flows through the seal-water flow channel from the feed water holes 68 to the discharge water holes 69. In other words, the seal water 6 flowing from the feed water holes 68 to the seal water flow path C1 is, in the seal-water flow channel between the feed water holes 68 and the discharge water holes 69, guided toward the relative rotational contact portions 41a and 42a of the second mechanical seal 4 by the second guide projection 22 and becomes reverse flow 6a. On the other hand, the seal water 6 flowing from the seal water flow path C1 to the discharge water holes 69, in the seal-water flow channel between the feed water holes 68 and the discharge water holes 69, is guided toward the relative rotational contact portions 31a and 32a of the first mechanical seal 3 by the first guide projection 21 and becomes reverse flow 6b. Thus, the reverse flows 6a and 6b keep the seal water 6 flowing without stoppage even in the area around the relative rotational contact portions 31a and 32a and 41a and 42a, thus enabling effective flushing of the sealing rings 31, 32, 41 and 42, which include the relative rotational contact portions 31a and 32a and the relative rotational contact portions 41a and 42a.

The second water feed/discharge means is, as shown in Figures 1 and 2, comprised of a feed water path 72 formed in the seal case 2 and connected to feed water lines 71 that are outside the seal case 2, a discharge water path 74 formed in the seal case 2 and connected to discharge water lines 73 that are outside the seal case 2, a ring-shaped feed water channel 75 that is formed in the inner-circumference surface of the seal case 2 and communicates to the feed water path 72, a ring-shaped discharge water channel 76 that is formed in the inner-circumference surface of the seal case 2 and communicates to the discharge water path 74, a shower ring 77 mounted on the inner-circumference surface of the seal case 2 to close the openings of the feed water channel 75 and discharge water channel 76. The second water feed/discharge means further includes feed water holes 78 and discharge water holes 79. The feed water holes 78 are formed in the shower ring 77 and are a plurality of through-holes provided at equal intervals in the circumferential direction of the shower ring 77 and communicate to the feed water channel 75, and the discharge water holes 79 are also formed in the shower ring 77 and are a plurality of through-holes provided at equal intervals in the circumferential direction of the shower ring 77 and communicate to the discharge water channel 76.
With the second water feed/discharge means thus constructed, the seal water 7 supplied from the feed water path 72 to the feed water channel 75 is supplied through all the feed water holes 78 to the second sealed space D while the feed water 7 inside the second sealed space D is discharged to the discharge water path 74 through all the discharge water holes 79 from the discharge water channel 76.
The feed water holes 78 are, as shown in Figure 1, 2 and 5, formed in the shower ring 67 such that they form openings that face the end part of the intra-mechanical region A side of the seal water flow path D 1 that is the outer-circumference surface of the rotational sealing ring (third rotational sealing ring) 52 of the third mechanical seal 5, in other words, the interface area between the large diameter part and small diameter part of the holding ring 16 that covers the sealing ring 52. The discharge water holes 79 are, as shown in Figures 1, 2 and 6, formed in the shower ring 67 such that they form openings that face the sealing end-face 51a, which is the outer-circumference surface of the stationary seal ring 51 (third stationary seal ring) of third mechanical seal 5.
The feed water path 72 of the second water feed/discharge means, as shown in Figures 1, 2 and 5, comprises a ring-shaped feed water header chamber 72a and a plurality of feed water connection channels 72b. The feed water header chamber 72a communicates to the feed water lines 71, and the plurality of feed water connection channels 72b are provided in the circumferential direction separated by equal intervals to communicate the feed water header chamber 72a to the interior of the feed water channel 75 that is closed by the shower ring 77. The thus constructed feed water path 72 supplies the seal water 7, which is supplied from the feed water lines 71 to the feed water header chamber 72a, from the plurality of feed water connection channels 72b to the feed water channel 75.
The discharge water path 74 of the second water feed/discharge means, as shown in Figures 1, 2 and 6, comprises a ring-shaped discharge header chamber 74a and a plurality of discharge connection channels 74b. The discharge header chamber 74a communicates to the discharge water lines 73, and the plurality of discharge connection channels 74b are provided in the circumferential direction separated by equal intervals to communicate the discharge header chamber 74a to the interior of the discharge water channel 76 that is closed by the shower ring 77. The thus constructed discharge water path 74 discharges the seal water 7, which is inside the second deal chamber D and flowed from the plurality of discharge water holes 79, to the discharge water lines 73 from the plurality of discharge connection channels 74b via the discharge header chamber 74a.
The feed water connection channels 72b and the discharge connection channels 74b are oblique channels that are slanted in opposite directions relative to the axis line of the rotary shaft 1. More specifically, as shown in Figures 1 and 2, the feed water connection channels 72b and the discharge connection channels 74b are designed so that the axial direction positional relationship of the feed/discharge header chambers 72a and 74a is a reverse of the axial direction positional relationship of the feed/discharge water channels 75 and 76, and the feed water connection channels 72b and the discharge connection channels 74b cross in an X shape in cross-section crossing along the axis line of the rotary shaft 1. The angle of inclination of the connection channels 72b and 74b relative to the axis line of the rotary shaft is set to 45° or roughly 45°. The number and shape (cross-sectional area (area of the cross-section orthogonal to the direction of water flow)) of the feed/discharge connection channels 72b and 74b and of the feed/discharge water holes 78 and 79 are set appropriately so that the total cross-sectional area of all the feed/discharge connection channels 72b and 74b is identical to the total cross-sectional area of all the feed/discharge water holes 78 and 79 or somewhat larger than the total cross-sectional area of all the feed/discharge water holes 78 and 79.
The shower ring 77 of the second water feed/discharge means is provided with an appropriate number of air vent holes 77a. The air vent holes 77a are disposed in the shower ring 77 at positions away from the discharge water holes 79 toward the atmosphere region B side, and they communicate the second sealed space D to the inside discharge water channel 76.

The feed/discharge water lines 71 and 73 of the second water feed/discharge means are connected to a seal-water supply device (not shown) equipped with plunger pumps or the like, and the feed/discharge water lines 71 and 73, the feed/discharge water paths 72 and 74, the feed/discharge water channels 75 and 76, the feed/discharge water holes 78 and 79, and the second sealed space D form a circulation line of the seal water 7. In other words, the seal water 7 at constant pressure is supplied from the feed water path 72 to the second sealed space D at constant flow rate while the same amount of seal water 7 is discharged from the second sealed space D to the discharge water path 74, thus supplying and circulating the seal water 7 in the second sealed space D at constant pressure. Accordingly, the second sealed space D is constantly filled with the seal water 7 and maintained at constant pressure. The pressure and circulation volume of the seal water 7 is set so that the second sealed space D is at lower pressure than the adjacent sealed space on the intra-mechanical region A side, that is, the first sealed space C, and higher than the atmospheric region B. For example, when the fluid in the intra-mechanical region A is high-pressure steam at 7.2 MPaG, as described above, the pressure of seal water 6 is set to 7.7 MPaG and the feed/discharge volume of seal water 6 (circulation volume) is set at 96 L/min, as described above, then the pressure of the seal water 7 is set to 3.5 MPaG and the feed/discharge volume of seal water 7 (circulation volume) is set to 61 L/min.

The relative rotational contact portions 51a and 52a of the third mechanical seal 5 are flushed by the seal water 7 supplied to and discharged from the second sealed space D. So as to make this flushing by the seal water 7 performed more efficiently, a ring-shaped third guide projection 23 is formed in the inner-circumference part of the shower ring 77 so that it is disposed at a position that faces the relative rotational contact portions 51a and 52a of the third mechanical seal 5, as shown in Figure 2. The seal water 7 flows from the feed water holes 78 toward the discharge water holes 79 through the seal water flow path D1; and during this flow, it produces reverse flow 7ajust like the reverse flows 6a and 6b in the first sealed space C described above. In other words, in the area around the relative rotational contact portions 51 a and 52a of the third mechanical seal 5, the seal water 7 becomes reverse flow 7a guided by the third guide projection 23 toward the relative rotational contact portions 51 a and 52a. This reverse flow 7a keeps the seal water 7 flowing without stagnation even in the area around the relative rotational contact portions 51a and 52a, enabling effective flushing of the sealing rings 51 and 52, which include the relative rotational contact portions 51a and 52a.

In this example shown above, the second stationary sealing ring 42 is lengthy in its axial direction; as a result, a long, cylindrical region D2 is produced that extends in the axial direction between the facing circumferential surfaces of the sealing ring 42 and rotary shaft 1 (sleeve 12) in the second sealed space D. However, it is designed so that in order to prevent, as much as possible, the phenomenon of the seal water 7 from being carried along with the rotation of the rotary shaft 1 in this cylindrical region, the frictional coefficient with the seal water 7 is reduced as much as possible by way of surface polishing (electrolytic polishing, buff polishing, etc.) done on the above-described facing circumferential surfaces while setting the interval between the facing circumferential surfaces (the radial direction width of cylindrical region D2) to a largest value possible.

In the seal device as described above, the space between the intra-mechanical region A and the extra-mechanical region (atmosphere region) B is sealed by means of the first and second sealed spaces C and D, which are filled with seal water whose pressure is lowered in stages toward the extra-mechanical region B side. Therefore, even when the fluid in the intra-mechanical region A is a high-pressure fluid such as pressurized steam, the intra-mechanical region A is sealed reliably, and pulsing of the seal water 7 that would be caused by the seal water circulation in the secondary seal, which is a tandem seal, is prevented as much as possible even when the rotary shaft 1 rotates at high speed, and vibration in the rotary shaft 1 and even in the rotation apparatus itself can be reduced greatly.

More specifically, in the present invention, the seal water 7 in the second sealed space D is fed and then discharged through the plurality of feed/discharge water holes 78 and 79 provided in the circumferential direction of the seal case 2 at equal intervals; as a result, pulsing of the seal water 7 is prevented or constrained enough to not generate vibration compared to the feeding and discharge of seal water through one location as in the conventional tandem seals described in the beginning of the present specification even when pumping or conveyance of the seal water 7 occurs in the periphery of the rotational sealing ring (third rotational sealing ring) 52 located within the second sealed space D during its rotation. Furthermore, all the feed/discharge water holes 78 and 79 are connected to the feed/discharge water lines 71 and 73 by means of the first ring-shaped chamber (feed/discharge water channels 75 and 76), the second ring-shaped chamber (header chambers 72a and 74a), and the plurality of feed/discharge connection channels 72b and 74b that communicate the two ring-shaped chambers to each other. Accordingly, abrupt pressure fluctuations are not produced in the feed/discharge water paths which are for the second sealed space D, thus enabling the generation of pulsing to be further effectively suppressed. To achieve this advantage, it is also effective to have the feed/discharge connection channels 72b and 74b cross in an X shape at an angle of inclination of about 45° as described above. Furthermore, seal water feeding is made radially from the plurality of feed water holes 78, provided at equal intervals in the circumferential direction, toward the outer-circumference surface of the rotational sealing ring (third rotational sealing ring) 52 disposed in the second sealed space D; accordingly, pumping and conveyance phenomena due to the rotation of the rotational sealing ring 52 is mitigated by the seal water 7 that flows from the seal water flow path D1 of the outer periphery of the rotational sealing ring to the feed water holes 79, and the generation of pulsing is suppressed even more effectively. Also, the facing circumference surfaces (cylinder region D2) of the second stationary seal ring 42 and rotary shaft 1 (sleeve 12) is designed so that the frictional coefficient between such surfaces and seal water 7 is reduced by surface polishing and such surfaces are expanded the maximum value as described above; accordingly, pulsing due to the conveyance of the seal water 7 is suppressed effectively.

Furthermore, in the present invention, the seal water 6 and 7 is supplied (sprayed) from the plurality of feed water holes 68 and 78 provided at equal intervals in the circumferential direction into the sealed spaces C and D; accordingly, flushing with the seal water 6 and 7 is more effectively achieved compared to the supply of seal water from a single location on the inner-circumference part of the seal case as in the conventional tandem seal described in the beginning of the present specification. In addition, the generation of reverse flows 6a, 6b and 7a by the guide projections 24, 25 and 26 further achieves even more effective flushing for the relative rotational contact portions 31a, 32a, 41a, 42a, 51a and 52a of the sealing rings.

As see from the above, according to the seal device of the present invention as described above, it is possible to accomplish extremely good sealing function without the problems described at the beginning of the present specification even under the conditions of high PV values of high speed and high pressure.

The construction of the present invention is not limited to the embodiment described above, and the present invention can be improved or altered appropriately so long as it does not depart from the basic principles of the present invention.

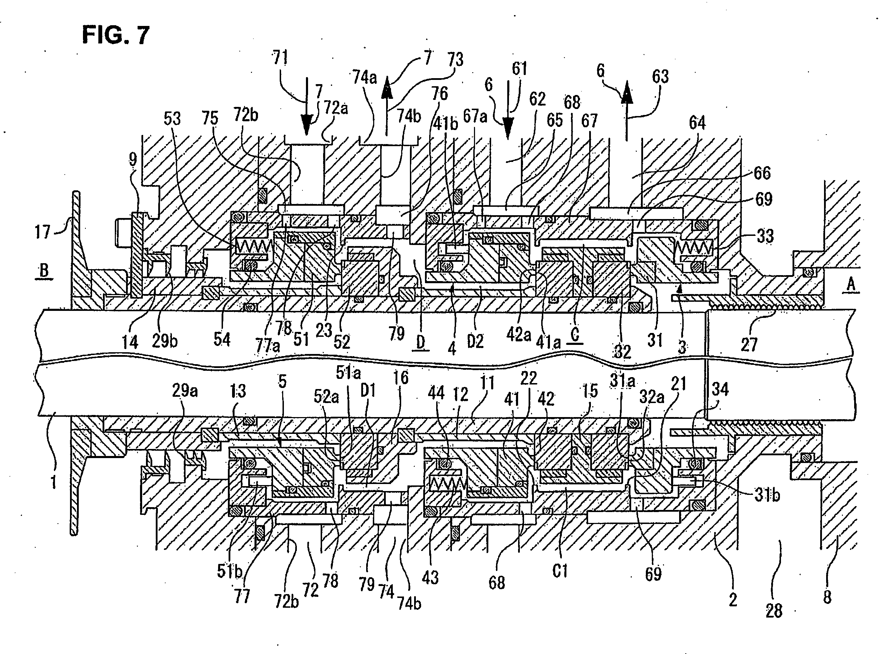

For example, as shown in Figure 7, the positional relationship in the axial direction of the feed/discharge holes 78 and 79 that are formed in the second sealed space D can be a reverse of the seal device shown in Figure 1 (hereafter, called the "first embodiment device") so that the feed water holes 78 are provided to face the outer-circumference surface of the stationary sealing ring (third stationary sealing ring) 51 in the atmosphere region side mechanical seal 5 while the discharge water holes 79 are provided to face the outer-circumference surface of the rotational sealing ring (third rotational sealing ring) 52 in mechanical seal 5. In other words, in the seal device shown in Figure 7 (hereafter, called the "second embodiment device"), the feed water holes and feed water channels of the first embodiment device are used as the discharge water holes 79 and discharge water channels 76, respectively, and the discharge water holes and discharge water channels of the first embodiment device are used as the feed water holes 78 and feed water channels 75, respectively. Furthermore, in the second embodiment device, the feed water header chamber and discharge header chamber of the first embodiment device are used as the feed water header chamber 72a and discharge header chamber 74a "as is," and the feed/discharge water channels 75 and 76 and the feed/discharge header chamber 72a and 74a are respectively communicated by the plurality of feed/discharge connection channels 72a and 74a that do not cross each other.

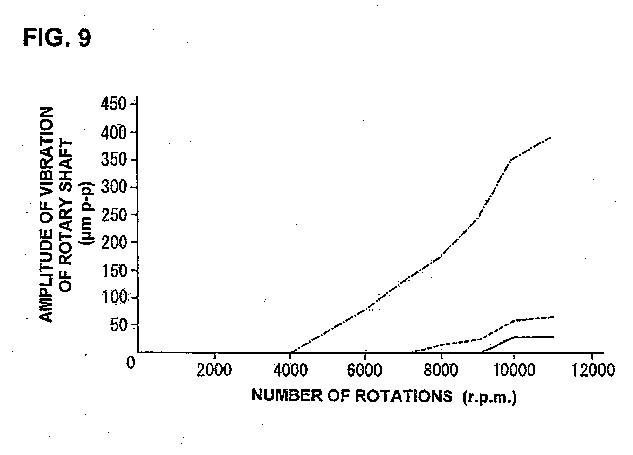

The second embodiment device is slightly inferior in terms of preventing the pulsing compared to the first embodiment device; however, it still be able to provide a pulse suppression effect much greater than that of the conventional tandem seals. This is confirmed by experiments. More specifically, experiments were conducted using the first and second embodiment devices and a seal device (hereafter, the "comparison device") that has the same structure as the second embodiment device except that the number of the feed/discharge water holes opened to the second sealed space D was set to one each, and each of the feed/discharge water hole is connected to its own feed/discharge water line by a single feed/discharge water path, and the amplitude of vibration of the rotary shaft I was measured while changing the number of rotations (rpm) of the rotary shaft 1 under identical conditions. The results are shown in Figure 9. Figure 9 shows the relationship between the number of rotations (rpm) of the rotary shaft 1 and the amplitude of vibration (µm p-p) that is indicated by the solid line for the first embodiment device, by the dotted line for the second embodiment device, and by the dot-dash line for the comparison device. The experimental results show that it was difficult to get good operation with the comparison device because the amplitude of vibration increased as the speed rotation of the rotary shaft increased. However, the vibration of the rotary shaft 1 was effectively suppressed in the first and second embodiment devices even under the condition of high-speed rotation, and in the first embodiment device in particular the vibration of the rotary shaft 1 was greatly suppressed.

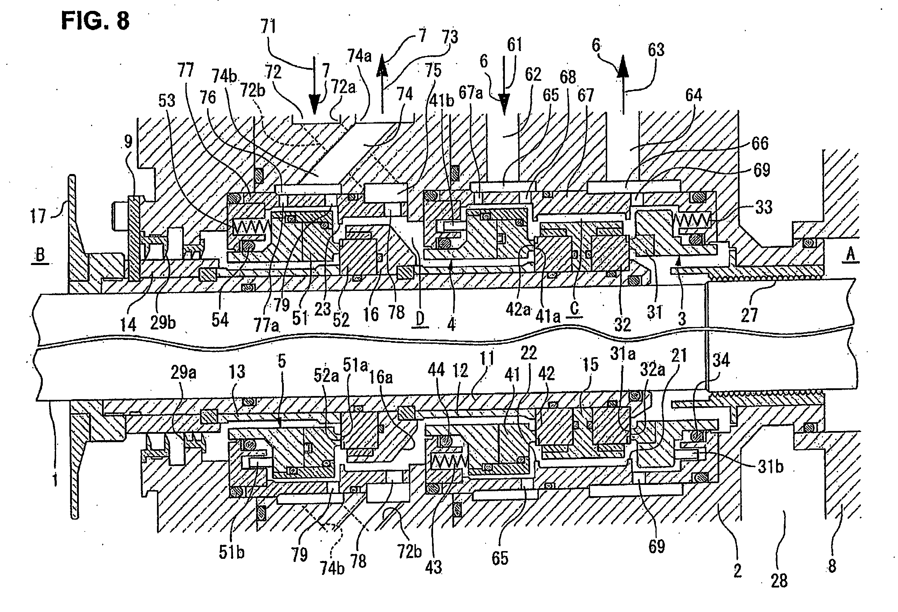

In order to suppress the pumping and conveyance phenomena of the seal water 7 due to the rotational sealing ring 52 in the second sealed space D, it is effective to give a consideration to the shape of the rotational sealing ring 52 in the first and second embodiment devices. Figure 8 shows an example. In Figure 8, the rear surface of the holding ring 16, i.e., the rear surface of the rotational sealing ring 52, in the first embodiment device is shaped into an inclined surface 16a whose diameter gradually decreases toward the intra-mechanical region A; as a result, the occurrence of pumping and conveyance phenomena of the seal water 7 caused by the rotation of the rotational sealing ring 52 is suppressed as much as possible.

Furthermore it goes without saying that the shaft-sealing device of the present invention can be appropriately used not just as a secondary seal in the seal device described above, and it can be used as an independent tandem seal or as a primary seal in a seal device that includes three or more mechanical seals.

## Claims

1. A shaft-seal device for a high-speed rotation apparatus, comprising a sealed fluid region side mechanical seal (4) and an atmosphere region side mechanical seal (5) that are provided in a tandem fashion,
wherein each of said mechanical seals (4,5) is comprised of:
a rotational sealing ring (42, 52) fixed to a rotary shaft (1), and
a stationary sealing ring (41, 51) that is held by a seal case (2), through which the rotary shaft (1) penetrates, so as to be movable in an axial direction thereof and that is pressed against the rotational sealing ring (42,52),
so that sealing end-faces (41a, 42a, 51a, 52a) that are facing end-faces of said rotational and stationary sealing rings (41, 42, 51, 52) make a relative rotational contact with each other; and
wherein seal water (7), at a pressure lower than a sealed fluid region that is an outer-diameter side region of the sealing end-faces (41a, 42a) of the sealed fluid region side mechanical seal (4) and at a pressure higher than an atmosphere region that is an inner-diameter side region of the sealing end-faced (51a, 52a) of the atmosphere region side mechanical seal (5), is supplied, to circulate, into a sealed space (D) which is between said two mechanical seals (4,5),
the shaft-seal device further comprising:
a water feed/discharge means that supplies and circulates the seal water (7) to the sealed space (D) is comprised of:
a feed water path (72) formed in the seal case (2) and connected to a feed water line (71) outside the seal case (2),
a discharge water path (74) formed in the seal case (2) and connected to a discharge water line (73) outside the seal case (2),
a ring-shaped feed water channel (75) that is formed in an inner-circumference surface of the seal case (2) and communicates to the feed water path (72),
a ring-shaped discharge water channel (76) that is formed in the inner-circumference surface of the seal case (2) and communicates to the discharge water path (74),
and the water feed/discharge means being **characterized by**:
a shower ring (77) mounted on the inner-circumference surface of the seal case (2) to close openings in the feed water channel (75) and discharge water channel (76),
feed water holes (78) that are formed in the shower ring (77) and communicate to the feed water channel (75), the feed water holes (78) being a plurality of through-holes provided at equal intervals in a circumferential direction of the shower ring (77), and
discharge water holes (79) that are formed in the shower ring (77) and communicate to the discharge water channel (76), the discharge water holes (79) being a plurality of through-holes provided at equal intervals in the circumferential direction of the shower ring (77), and
by the seal water (7) being supplied from the feed water path (72) to the feed water channel (75) is supplied through all the feed water holes (78) to the sealed space (D) while the feed water inside the sealed space (D) is discharged to the discharge water path (74) through all the discharge water holes (79) through to the discharge water channel (76), thus suppressing pulsing phenomena in the seal water (7) occurring inside the sealed space (D) caused by the supply and circulation of the seal water (7).

2. The shaft-seal device for a high-speed rotation apparatus according to Claim 1 **characterized in that** the feed water holes (78) are provided so as to face the outer-circumference surface of the rotational sealing ring (52) of the atmosphere region side mechanical seal (5) while the discharge water holes (79) are provided so as to face the outer-circumference surface of the stationary sealing ring (51) of the atmosphere region side mechanical seal (5).

3. The shaft-seal device for a high-speed rotation apparatus according to Claim 1 **characterized in that** the feed water holes (78) are provided so as to face the outer-circumference surface of the stationary sealing ring (51) of the atmosphere region side mechanical seal (5) while the discharge water holes (79) are provided so as to face the outer-circumference surface of the rotational sealing ring (52) of the atmosphere region side mechanical seal (5).

4. The shaft-seal device for a high-speed rotation apparatus according to any one of Claims 1 through 3 **characterized in that**
the feed water path (72) comprises a ring-shaped feed water header chamber (72a) that communicates to the feed water line (71) and a plurality of feed water connection channels (72b) that are disposed at equal intervals in the circumferential direction and communicate the feed water header chamber (72a) to an interior of the feed water channel (75) closed by the shower ring (77), and
the discharge water path (74) comprises a ring-shaped discharge header chamber (74a) that communicates to the discharge water line (73) and a plurality of discharge connection channels (74a) that are disposed at equal intervals in the circumferential direction and communicate the discharge header chamber (74a) to an interior of the discharge water channel (76) closed by the shower ring (77).

5. The shaft-seal device for a high-speed rotation apparatus according to Claim 4 **characterized in that** the feed water connection channels (72b) and the discharge connection channels (74b) are provided to form an X shape in cross-section crossing along an axis line of the rotary shaft (1).

## Patentansprüche

1. Wellenabdichtungsvorrichtung für eine Hochgeschwindigkeitsrotationsvorrichtung mit einer mechanischen Abdichtung (4) auf der abgedichteten Flüssigkeitsbereichsseite und einer mechanischen Abdichtung (5) im Bereich der Atmosphärenseite, die in Tandem angeordnet sind, wobei jede der mechanischen Abdichtungen (4, 5) von einem auf einer Drehwelle (1) angeordneten rotierenden Dichtring (42, 52) und einem stationären Dichtring (41, 51) gebildet ist, der durch ein Dichtungsgehäuse (2) gehalten wird, durch das die rotierende Welle (1) hindurchgeführt ist, so dass er in einer axialen Richtung hiervon beweglich ist, und der gegen den rotierenden Dichtring (42, 52) gedrückt wird, so dass Abdichtungsendflächen (41a, 42a, 51a, 52a), die einander gegenüber liegende Endflächen der rotierenden und stationären Dichtringe (41, 42, 51, 52) darstellen, einen relativen rotierenden Kontakt miteinander ausführen, und wobei Dichtwasser (7) bei einem Druck unter dem eines abgedichteten Flüssigkeitsbereichs, der einen Außendurchmesserseitenbereich der Abdichtungsendflächen (41a, 42a) der mechanischen Abdichtung (4) auf der abgedichteten Flüssigkeitsbereichsseite darstellt, und bei einem Druck über dem eines atmosphärischen Bereichs, der einen Innendurchmesserseitenbereich der Abdichtendflächen (51a, 52a) der mechanischen Abdichtung (5) im Bereich der Atmosphärenseite darstellt, zugeführt wird und in einem abgedichteten Raum (D) zirkuliert, der zwischen den zwei mechanischen Abdichtungen (4, 5) liegt,
wobei die Wellenabdichtungsvorrichtung weiterhin umfasst:
eine Wasserzufuhr/-abführvorrichtung, die das Dichtwasser (7) dem abgedichteten Raum (D) zuführt und dort zirkuliert, bestehend aus einer in dem Dichtungsgehäuse (2) ausgeformten und an einer Zufuhrwasserleitung (71) außerhalb des Dichtungsgehäuses angeschlossenen Zufuhrwasserleitung (72), einer in dem Dichtungsgehäuse (2) ausgeformten und an einer Abführwasserleitung (73) außerhalb des Dichtungsgehäuses (2) angeschlossenen Abführwasserleitung (74), einem an einer inneren Umfangsfläche des Dichtungsgehäuses (2) ausgebildeten und mit der Zufuhrwasserleitung (72) in Verbindung stehenden ringförmigen Zufuhrwasserkanal (75), einem an der inneren Umfangsfläche des Dichtungsgehäuses (2) ausgebildeten und mit der Abfuhrwasserleitung (74) in in Verbindung stehenden ringförmigen Abfuhrwasserkanal (76),
und wobei die Wasserzuführungs- und -abfuhrvorrichtung **gekennzeichnet ist durch** einen an der Innenumfangsfläche des Dichtungsgehäuses (2) montierten Brausering (77), um Öffnungen in dem Zufuhrwasserkanal (75) und dem Abfuhrwasserkanal (76) zu schließen,
im Brausering (77) ausgeformten und mit dem Zufuhrwasserkanal (75) in Verbindung stehenden Zulaufwasserlöcher (78), wobei die Zulaufwasserlöcher (78) eine Vielzahl von gleichbeabstandeten Durchgangslöchern in der Umfangsrichtung des Brauserings (77) sind,
im Brausering (77) ausgeformten und mit dem Abwasserkanal (76) in Verbindung stehenden Ablaufwasserlöcher (79), wobei die Ablaufwasserlöcher (79) eine Vielzahl von gleichbeabstandeten Durchgangslöchern in der Umfangsrichtung des Brauserings (77) sind,
sowie **dadurch**, dass das Dichtwasser (7) von der Zufuhrwasserleitung (72) zum Zufuhrwasserkanal (75) **durch** alle Zulaufwasserlöcher (78) dem abgedichteten Raum (D) zugeführt wird, während das Zufuhrwasser im Innern des abgedichteten Raums (D) zu der Abfuhrwasserleitung (74) **durch** alle Ablaufwasserlöcher (79) **durch** den Abführwasserkanal (76) abgeführt wird, wodurch Stoßphänomene im Dichtwasser (7), die **durch** die Zuführung und die Zirkulation des Dichtwassers (7) innerhalb des abgedichteten Raums (D) auftreten, unterdrückt werden.

2. Wellenabdichtungsvorrichtung für eine Hochgeschwindigkeitsrotationsvorrichtung nach Anspruch 1,
**dadurch geknnzeichnet,** dass die Zulaufwasserlöcher (78) so vorgesehen sind, dass sie der Außenumfangsfläche des rotierenden Dichtrings (52) der mechanischen Abdichtung (5) im Bereich der Atmosphärenseite gegenüber liegen, während die Ablaufwasserlöcher (79) so vorgesehen sind, dass sie der Außenumfangsfläche des stationären Dichtrings (51) der mechanischen Abdichtung (5) im Bereich der Atmosphärenseite gegenüber liegen.

3. Wellenabdichtungsvorrichtung für eine Hochgeschwindigkeitsrotationsvorrichtung nach Anspruch 1,
**dadurch gekennzeichnet, dass** die Zulaufwasserlöcher (78) so vorgesehen sind, dass sie der Außenumfangsfläche des stationären Dichtrings (51) der mechanischen Abdichtung (5) im Bereich der Atmosphärenseite gegenüber liegen, während die Ablaufwasserlöcher (79) so vorgesehen sind, dass sie der Außenumfangsfläche des rotierenden Dichtrings (52) der mechanischen Abdichtung (5) im Bereich der Atmosphärenseite gegenüber liegen.

4. Wellenabdichtungsvorrichtung für eine Hochgeschwindigkeitsrotationsvorrichtung nach einem der Ansprüche 1 bis 3,
**dadurch gekennzeichnet, dass** die Zufuhrwasserleitung (72) eine ringförmige Zufuhrwasserverteilerkammer (72a), die mit der Zufuhrwasserleitung (71) in Verbindung steht, und eine Vielzahl von in Umfangsrichtung gleichbeabstandet vorgesehenen Zufuhrwasserverbindungskanälen (72b) umfasst, die die Zufuhrwasserverteilerkammer (72a) mit einem Innenraum des Zufuhrwasserkanals (75) verbinden, der durch den Brausering (77) abgeschlossen ist, und die Abfuhrwasserleitung (74) eine ringförmige Abführverteilerkammer (74a), die mit der Abfuhrwasserleitung (73) in Verbindung steht, und eine Vielzahl von in Umfangsrichtung gleich beabstandet vorgesehenen Abführverbindungskanälen (74a) umfasst, die die Abführvertellerkammer (74a) mit einem Innenraum des Abfuhrwasserkanals (76) verbinden, der durch den Brausering (77) verschlossen ist.

5. Wellenabdichtungsvorrichtung für eine Hochgeschwindigkeitsrotationsvorrichtung nach Anspruch 4,
**dadurch gekennzeichnet, dass** die Zufuhrwasserverbindungskanäle (72b) und die Abführverbindungskanäle (74b) so vorgesehen sind, dass sie im Querschnitt eine X-Form bilden, die sich entlang einer Achsenlinie der Drehwelle (1) kreuzt.

## Revendications

1. Dispositif d'étanchéité d'arbre pour un appareil rotatif à haute vitesse, comprenant un joint d'étanchéité mécanique (4) côté zone de fluide étanchée ainsi qu'un joint d'étanchéité mécanique (5) côté zone atmosphérique qui sont disposés en tandem,
dans lequel chacun des joints d'étanchéité mécaniques (4, 5) est constitué par :
une bague d'étanchéité rotative (42, 52) disposée sur un arbre rotatif (1) et
une bague d'étanchéité stationnaire (41, 51) qui est maintenue par un boîtier d'étanchéité (2) traversé par ledit arbre rotatif (1) de manière à être déplaçable dans une direction axiale de celui-ci et qui est plaquée contre ladite bague d'étanchéité rotative (42, 52),
de sorte que des surfaces terminales d'étanchéité (41 a, 42a, 51 a, 52a) qui sont des surfaces terminales d'étanchéité opposées desdites bagues d'étanchéité rotative et stationnaire (41, 42, 51, 52) réalisent un contact rotatif relatif les unes avec les autres ; et
dans lequel de l'eau d'étanchéité (7), à une pression inférieure à celle d'une zone de fluide étanchée qui est une zone latérale de diamètre extérieur des surfaces terminales d'étanchéité (41a, 42a) du joint d'étanchéité mécanique (4) côté zone de fluide étanchée, et à une pression supérieure à celle d'une zone atmosphérique qui est une zone latérale de diamètre intérieur des surfaces terminales d'étanchéité (51 a, 52a) du joint d'étanchéité mécanique (5) côté zone atmosphérique, est fournie pour circuler dans un espace étanché (D) qui est situé entre les deux joints d'étanchéité mécaniques (4, 5),
ledit dispositif d'étanchéité d'arbre comprenant en outre :
un moyen d'alimentation/d'évacuation d'eau qui amène et fait circuler l'eau d'étanchéité (7) vers ledit espace étanché (D), constitué par :
un trajet d'eau d'alimentation (72) formé dans ledit boîtier d'étanchéité (2) et connecté à une conduite d'eau d'alimentation (71) à l'extérieur du boîtier d'étanchéité (2),
un trajet d'eau d'évacuation (74) formé dans ledit boîtier d'étanchéité (2) et connecté à une conduite d'eau d'évacuation (73) à l'extérieur du boîtier d'étanchéité (2),
un canal d'eau d'alimentation (75) annulaire qui est formé dans une surface périphérique intérieure du boîtier d'étanchéité (2) et communique avec ledit trajet d'eau d'alimentation (72),
un canal d'eau d'évacuation (76) annulaire qui est formé dans la surface périphérique intérieure du boîtier d'étanchéité (2) et communique avec ledit trajet d'eau d'évacuation (74),
et ledit moyen d'alimentation/d'évacuation d'eau étant **caractérisé par**
une bague d'arrosage (77) montée sur la surface périphérique intérieure du boîtier d'étanchéité (2) pour fermer des orifices dans ledit canal d'eau d'alimentation (75) et ledit canal d'eau d'évacuation (76),
des trous d'eau d'alimentation (78) qui sont formés dans ladite bague d'arrosage (77) et communiquent avec ledit canal d'eau d'alimentation (75), lesdits trous d'eau d'alimentation (78) étant une pluralité de trous traversants disposés à distance égale dans la direction circonférentielle de ladite bague d'arrosage (77), et
des trous d'eau d'évacuation (79) qui sont formés dans ladite bague d'arrosage (77) et communiquent avec ledit canal d'eau d'évacuation (76), lesdits trous d'eau d'évacuation (79) étant une pluralité de trous traversants disposés à distance égale dans la direction circonférentielle de ladite bague d'arrosage (77), ainsi que
par le fait que l'eau d'étanchéité (7) est amenée depuis le trajet d'eau d'alimentation (72) vers le canal d'eau d'alimentation (75) à travers l'ensemble des trous d'eau d'alimentation (78) audit espace étanché (D), tandis que l'eau d'alimentation à l'intérieur de l'espace étanché (D) est évacuée vers ledit trajet d'eau d'évacuation (74) à travers l'ensemble des trous d'eau d'évacuation (79) au travers du canal d'eau d'évacuation (76), supprimant ainsi des phénomènes de pulsation dans l'eau d'étanchéité (7) se produisant à l'intérieur de l'espace étanché (D) par l'amenée et la circulation de l'eau d'étanchéité (7).

2. Dispositif d'étanchéité d'arbre pour un appareil rotatif à haute vitesse, selon la revendication 1, **caractérisé par le fait que** les trous d'eau d'alimentation (78) sont prévus de manière à ce qu'ils soient situés en regard de la surface périphérique extérieure de ladite bague d'étanchéité rotative (52) du joint d'étanchéité mécanique (5) côté zone atmosphérique, tandis que les trous d'eau d'évacuation (79) sont prévus de manière à ce qu'ils soient situés en regard de la surface périphérique extérieure de ladite bague d'étanchéité stationnaire (51) du joint d'étanchéité mécanique (5) côté zone atmosphérique.

3. Dispositif d'étanchéité d'arbre pour un appareil rotatif à haute vitesse, selon la revendication 1, **caractérisé par le fait que** les trous d'eau d'alimentation (78) sont prévus de manière à ce qu'ils soient situés en regard de la surface périphérique extérieure de ladite bague d'étanchéité stationnaire (51) du joint d'étanchéité mécanique (5) côté zone atmosphérique, tandis que les trous d'eau d'évacuation (79) sont prévus de manière à ce qu'ils soient situés en regard de la surface périphérique extérieure de ladite bague d'étanchéité rotative (52) du joint d'étanchéité mécanique (5) côté zone atmosphérique.

4. Dispositif d'étanchéité d'arbre pour un appareil rotatif à haute vitesse, selon l'une quelconque des revendications 1 à 3, **caractérisé par le fait que**
ledit trajet d'eau d'alimentation (72) comprend une chambre annulaire distributrice d'eau d'alimentation (72a) qui communique avec la conduite d'eau d'alimentation (71), et une pluralité de canaux de connexion d'eau d'alimentation (72b) qui sont prévus à distance égale dans la direction circonférentielle et font communiquer ladite chambre distributrice d'eau d'alimentation (72a) à un intérieur du canal d'eau d'alimentation (75) fermé par ladite bague d'arrosage (77), et
ledit trajet d'eau d'évacuation (74) comprend une chambre annulaire distributrice d'évacuation (74a) qui communique avec la conduite d'eau d'évacuation (73), et une pluralité de canaux de connexion d'évacuation (74a) qui sont prévus à distance égale dans la direction circonférentielle et font communiquer ladite chambre distributrice d'évacuation (74a) à un intérieur du canal d'eau d'évacuation (76) fermé par ladite bague d'arrosage (77).

5. Dispositif d'étanchéité d'arbre pour un appareil rotatif à haute vitesse, selon la revendication 4, **caractérisé par le fait que** les canaux de connexion d'eau d'alimentation (72b) et les canaux de connexion d'évacuation (74b) sont prévus de manière à former une forme en X en coupe transversale se coupant le long d'une ligne axiale de l'arbre rotatif (1).
